# EUROPEAN PATENT APPLICATION

(11) **EP 4 726 585 A1**
(43) Date of publication of application: **15.04.2026**
(21) Application number: 24905457.8
(22) Date of filing: 14.06.2024
(51) Int. Cl.: G06F 21/53

(54) **CONTROL METHOD FOR ELECTRONIC DEVICE AND ELECTRONIC DEVICE**

(30) Priority: 18.12.2023 CN 202311754303
(71) Applicant: Huawei Technologies Co., Ltd., Shenzhen, Guangdong 518129 (CN)
(72) Inventor: LIU, Chengyuan, Shenzhen, Guangdong 518129 (CN); LIU, Jie, Shenzhen, Guangdong 518129 (CN); CHEN, Kang, Shenzhen, Guangdong 518129 (CN); HU, Jianglei, Shenzhen, Guangdong 518129 (CN); REN, Yunbo, Shenzhen, Guangdong 518129 (CN)
(74) Representative: Pfenning, Meinig & Partner mbB
(86) International application number: PCT/CN2024/099392
(87) International publication number: WO 2025/129954

(57) **Abstract**

Embodiments of this application are applicable to the field of terminal technologies, and provide an electronic device control method and an electronic device. Based on the method, when receiving information that a target event occurs, a trusted execution environment module in the electronic device may send a power-off instruction to a driver module, to drive to turn off a control switch of a target module, thereby powering off the target module. Both the control switch of the target module and the driver module may be configured or installed in the trusted execution environment module. In this way, both a process in which the driver module receives the power-off instruction and a process in which the driver module drives to turn off the control switch of the target module may be completed in the trusted execution environment module, so that security of a processing process is improved. In addition, turning off the control switch of the target module to power off the target module is control at a physical level. Compared with stopping use of the target module in a form of a software instruction, this greatly improves security of a control process, and further reduces a possibility of user privacy leakage.

## Description

This application claims priority to Chinese Patent Application No. 202311754303.8, filed with the China National Intellectual Property Administration on December 18, 2023 and entitled "ELECTRONIC DEVICE CONTROL METHOD AND ELECTRONIC DEVICE", which is incorporated herein by reference in its entirety.

### TECHNICAL FIELD

Embodiments of this application relate to the field of terminal technologies, and in particular, to an electronic device control method and an electronic device.

### BACKGROUND

Development of the information technology and mobile communication technologies brings numerous conveniences to people's life. People can conveniently complete operations such as shopping, taxi hailing, and payment by using electronic devices such as mobile phones. In a process of using an electronic device, the electronic device masters an increasing amount of information. Once the information is leaked out, daily life of a user may be adversely affected.

In the conventional technology, to prevent information in an electronic device from being leaked out, some electronic devices may be set to disable functions of individual modules or devices in a privacy mode. For example, in the privacy mode of the electronic device, after a screen of the electronic device is turned off, a camera may be disabled. In this way, the electronic device in a screen-off state cannot capture an image or shoot a video by using the camera, so that a possibility of information leakage is reduced, and user privacy is protected. In the conventional technology, the foregoing privacy protection is mainly implemented in a manner of software control. The electronic device delivers a disable instruction to individual modules or components in a form of a software instruction, to disable running of these modules or components. However, in some cases, these modules or components that stop running may still be enabled, and it is difficult to strictly protect user privacy. For example, the electronic device is intruded by a malicious program. In the screen-off state, the malicious program may illegally invoke the camera to capture an image when the user is unaware, causing user privacy leakage.

### SUMMARY

Based on an electronic device control method and an electronic device that are provided in embodiments of this application, control for a privacy mode may be completed through power-on and power-off of a hardware component instead of a software framework, to implement stricter and more accurate privacy protection.

To achieve the foregoing objective, this application uses the following technical solutions.

According to a first aspect, an electronic device control method is provided, including: A trusted execution environment module of an electronic device monitors a target event; and when receiving information that the target event occurs, sends a power-off instruction to a driver module, where the power-off instruction is used to drive a target module to be powered off. The driver module is deployed in the trusted execution environment module, and a control switch of the target module is configured in the trusted execution environment module.

The trusted execution environment (trusted execution environment, TEE) module may be constructed in the electronic device by using the electronic device control method provided in this embodiment of this application, and processing of sensitive data in the electronic device may be implemented by the TEE module, to implement privacy calculation and protection of the sensitive data. When the TEE module receives the information that the target event occurs, the TEE module may send the power-off instruction to the driver module, and the driver module drives the target module in the electronic device to be powered off. In this embodiment of this application, the driver module is deployed in the TEE module, so that data processing of the driver module can be completed in a trusted execution environment, thereby improving data processing security. The control switch of the target module is configured in the TEE module, and the control switch is a hardware control switch. When the driver module in the TEE module drives to turn off the control switch of the target module, each target module may be powered off, to implement connection and disconnection of each target module at a physical level. Running of each target module cannot be controlled by any software level operation. This not only implements hardware-level control, but also improves security of a control process.

It should be understood that the target event may be some events that occur on the electronic device. When this type of event occurs or happens, if running of the target module is not properly controlled, user privacy may be adversely affected because the target module continuously runs. For example, if the electronic device is a foldable device, after the foldable device is folded, if modules such as a camera and a microphone are allowed to continue to run, the modules such as the camera and the microphone may collect privacy data of a user when the user is unaware, increasing a risk of user privacy leakage. Therefore, when the target event occurs, these target modules may be powered off in a physical manner by using the driver module, so that the risk of user privacy leakage can be reduced.

In a possible implementation of this embodiment of this application, the target module may include at least one of the following modules in the electronic device: a camera module, a microphone module, a positioning module, a Near Link module, or a sensor hub.

In another possible implementation of this embodiment of this application, there are a plurality of target modules, and control switches of the plurality of target modules are integrated at a same port in the TEE module. In this way, the power-off instruction received by the driver module may be used to simultaneously drive to turn off the control switches of the plurality of target modules, so that the plurality of target modules are powered off simultaneously, thereby ensuring timing consistency.

In a possible implementation of this embodiment of this application, sending the power-off instruction to the driver module when receiving the information that the target event occurs includes: When the information that the target event occurs is received, the information that the target event occurs is broadcast to the target module by using a privacy mode CA, where the information may indicate the target module to perform power-off preparation, that is, context protection before power-off; and when information that is fed back by the target module by using the privacy mode CA and that indicates that the power-off preparation is completed is received, it indicates that context protection of each target module is completed. In this case, the TEE module may send the power-off instruction to the driver module. In this way, when receiving the information that the target event occurs, the TEE module may notify, in a timely manner by using the privacy mode TA, the target module to perform the power-off preparation, to avoid sudden power-off of the target module, and help ensure normal running of another module and a system.

The information that the target module completes the power-off preparation may be fed back by the target module to the TEE module by using the privacy mode CA. To be specific, after each target module completes the power-off preparation, the privacy mode CA may send, to the TEE module, the information that each target module completes the power-off preparation. If the TEE module does not receive the information that is fed back by the target module by using the privacy mode CA and that indicates that the power-off preparation is completed, the TEE module may directly send the power-off instruction to the driver module at a preset moment after the target event occurs. The preset moment may be a time point after the TEE module receives the information that the target event occurs, or may be a time point after the privacy mode CA broadcasts the target event to the target module. For example, after the target event occurs, the privacy mode CA broadcasts, to the target module, the information that the target event occurs. If the TEE module does not receive, within x seconds after the privacy mode CA broadcasts the information, the information that is fed back by the privacy mode CA and that indicates that the power-off preparation of each target module is completed, the TEE module may directly notify, by using a privacy mode TA, the driver module to power off the target module. A value of x may be determined based on an actual requirement.

It should be understood that the power-off preparation may include at least one of the following processing: terminating a service currently executed by the target module, and storing key data of the service; or decoupling the target module from another module; or decoupling each module in the target module. Through the foregoing processing, a problem of data loss caused by sudden power-off of the target module can be avoided, and a problem that another module associated with the target module cannot run normally after the target module is powered off can also be avoided. By decoupling each module in the target module, each module in the target module can be protected, and a probability that the target module cannot be started after being powered on again can be reduced.

In a possible implementation of this embodiment of this application, when the TEE module receives the information that the target event occurs, the TEE module may verify authenticity of the target event, and after verification on the target event succeeds, the TEE module sends the power-off instruction to the driver module. Specifically, when the TEE module receives the information that the target event occurs, the TEE module obtains a key carried in information indicating the target event; verifies the target event based on the key; and when the verification on the target event succeeds, the TEE module sends the power-off instruction to the driver module. The information that the target event occurs may be sent by the privacy mode CA to the TEE module. The TEE module may send the power-off instruction to the driver module by using the privacy mode TA. To be specific, after the verification on the target event succeeds, the privacy mode TA in the TEE module sends the power-off instruction to the driver module.

It should be understood that another application or program in the electronic device may access the driver module, and the information indicating the target event may be information transferred by the another application or program in an access process. The TEE module may verify authenticity of the target event by obtaining the key carried in the information. The foregoing information is sent by the privacy mode CA to the TEE module.

In a possible implementation of this embodiment of this application, the key carried in the information transferred by the another application or program may include at least one of a universally unique identifier UUID, a permission group key, or a scene ID. When verifying the target event based on the key, the TEE module may match the key with currently configured keys in the privacy mode; and if the key successfully matches all the corresponding currently configured keys in the privacy mode, it may be determined that the verification on the target event succeeds; and otherwise, it is determined that the verification on the target event does not succeed. In an example, if the target event is that the foldable device changes from an unfolded state to a folded state, that the verification on the target event succeeds may indicate that a folding event actually occurs on the foldable device, and the target module needs to be powered off, to ensure privacy security of the user. Therefore, the TEE module may send the power-off instruction to the driver module after the verification on the target event succeeds.

In a possible implementation of this embodiment of this application, the electronic device may be the foldable device, and the target event may be an event that the foldable device changes from the unfolded state to the folded state. Therefore, receiving, by using the TEE module of the electronic device, the information that the target event occurs may be receiving, by using the TEE module of the foldable device, an open-close signal that is of the foldable device and that is sent by the privacy mode CA. The open-close signal is a signal representing that the foldable device is converted from the unfolded state to the folded state, and the open-close signal is a software signal.

In another possible implementation of this embodiment of this application, after the open-close signal that is of the foldable device and that is sent by the privacy mode CA is received by using the TEE module of the foldable device, a bending hardware signal of the foldable device may be further actively obtained by using a driver. The bending hardware signal may be a hardware signal representing that the foldable device is converted from the unfolded state to the folded state. In this way, if the open-close signal is consistent with the bending hardware signal, it may be determined that the target event occurs, and subsequent processing is performed; and otherwise, it may be considered that the target event does not occur.

According to a second aspect, an electronic device is provided, where a TEE module and a driver module are configured in the electronic device. The driver module is deployed in the TEE module, and a control switch of a target module is further configured in the TEE module. When the TEE module receives information that a target event occurs, the TEE module may send a power-off instruction to the driver module, and the power-off instruction is used to drive the target module to be powered off.

In a possible implementation of the second aspect, the electronic device may include a plurality of target modules, and control switches of the plurality of target modules may be integrated at a same port in the TEE module. In this way, the power-off instruction received by the driver module may be used to simultaneously drive to turn off the control switches of the plurality of target modules, so that the plurality of target modules are powered off simultaneously, thereby ensuring timing consistency.

In another possible implementation of the second aspect, the information that the target event occurs and that is received by the TEE module in the electronic device may be sent by a privacy mode CA to the TEE module. When the target event occurs, the privacy mode CA may detect, through listening, occurrence of the target event, and send related information to the TEE module. In addition, the privacy mode CA may broadcast, to the target module, the information that the target event occurs, to notify the target template to perform power-off preparation processing. After completing the power-off preparation, the target module may feed back a message that the power-off preparation is completed to the TEE module. The target module may feed back the message that the power-off preparation is completed to the TEE module also by using the privacy mode CA. To be specific, after completing the power-off preparation, the target module feeds back the message to the privacy mode CA, and then the privacy mode CA feeds back the message that each target module completes the power-off preparation to the TEE module. After all target modules complete the power-off preparation, the TEE module may send the power-off instruction to the driver module by using a privacy mode TA.

According to a third aspect, an electronic device is provided. The electronic device includes a memory, a processor, and a computer program that is stored in the memory and that can run on the processor. When the processor executes the computer program, the electronic device control method according to any implementation of the first aspect can be implemented.

According to a fourth aspect, a computer-readable storage medium is provided, where the computer-readable storage medium includes a memory and a processor. The processor executes a computer program stored in the memory, to implement the electronic device control method according to any implementation of the first aspect.

According to a fifth aspect, a chip is provided. The chip includes a memory and a processor. The processor executes a computer program stored in the memory, to implement the electronic device control method according to any implementation of the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1 is a diagram of differences between an electronic device control method according to an embodiment of this application and a related method in the conventional technology;
FIG. 2 is a diagram of an architecture of a system to which an electronic device control method is applicable according to an embodiment of this application;
FIG. 3 is a diagram of an electronic device control method according to an embodiment of this application;
FIG. 4(a) and FIG. 4(b) are a diagram of an interface operation for enabling privacy protection according to an embodiment of this application;
FIG. 5(a), FIG. 5(b), and FIG. 5(c) are a diagram of an interface operation for disabling privacy protection according to an embodiment of this application;
FIG. 6 is a diagram of a control logic of target modules according to an embodiment of this application;
FIG. 7 is a diagram of controlling a GPS module to be powered off according to an embodiment of this application;
FIG. 8A and FIG. 8B are a diagram of a permission verification procedure according to an embodiment of this application;
FIG. 9 is a schematic flowchart of an electronic device control method according to an embodiment of this application;
FIG. 10 is a diagram of steps of an electronic device control method according to an embodiment of this application; and
FIG. 11 is a block diagram of a structure of an electronic device according to an embodiment of this application.

### DESCRIPTION OF EMBODIMENTS

For ease of clearly describing the technical solutions in embodiments of this application, in embodiments of this application, words such as "first" and "second" are used to distinguish same items or similar items whose functions and roles are basically the same. For example, a first module, a second module, and the like are merely intended to distinguish between different modules in an electronic device, and do not impose any other limitation on the first module, the second module, and the like.

It should be noted that, in embodiments of this application, the word "example" or "for example" or the like represents giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Steps in an electronic device control method provided in embodiments of this application are merely used as examples. Not all steps are mandatory steps, or not all content in each step is mandatory. In a use process, addition or deletion may be performed as required. A same step or steps or content having a same function in embodiments of this application may be mutually referenced in different embodiments.

Generally, an electronic device may disable functions of individual modules or components, to prevent leakage of user privacy. For example, after a screen of the electronic device is turned off, the electronic device may disable the camera. In this way, the disabled camera cannot run normally, so that the electronic device in a screen-off state can be prevented from illegally acquiring an image when a user is unaware. Alternatively, after a foldable device is folded, the foldable device may disable a microphone, to prevent the microphone from illegally acquiring voice of the user when the user is unaware. However, in the conventional technology, disabling each module of the electronic device is implemented in a form of a software instruction. For example, after the screen of the electronic device is turned off, a processor of the electronic device may send an instruction to the camera, to indicate the camera to stop running or disable use of a related function. This disabling manner is connection and disconnection in a sense of software, and control of related modules is implemented based on a software framework of the electronic device. In some cases, for example, after an operating system of the electronic device is illegally intruded, these disabled modules may still be illegally started. For example, in the screen-off state, after the electronic device indicates, by using a software instruction, the camera to disable an image acquisition function, a software program that illegally intrudes the electronic device may restart the camera, and continue to capture an image in the screen-off state. In this way, the camera still runs normally when the user is unaware. This increases a risk of user privacy leakage.

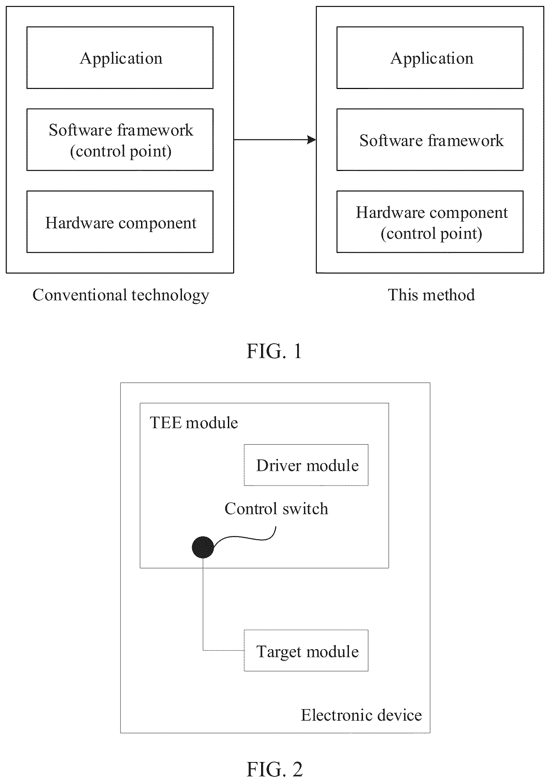

For the foregoing problem, an embodiment of this application provides an electronic device control method. According to this method, control of some modules of the electronic device may be implemented by a hardware component on the electronic device. FIG. 1 shows differences between the electronic device control method according to this embodiment of this application and a related method in the conventional technology. It can be learned from FIG. 1 that, in the conventional technology, disabling related modules is implemented by using a software framework, and control of these related modules is implemented based on the software framework. To be specific, a control point in the conventional technology is on the software framework. However, module disabling implemented by using the electronic device control method provided in this embodiment of this application is implemented based on a hardware component. To be specific, a control point in this method is on the hardware component. In this way, connection and disconnection in the sense of hardware can be implemented through control of the hardware component, to achieve "super" privacy protection. For example, when individual modules need to be disabled in some cases, the electronic device may directly control, from a hardware side, the related modules to be powered off, and disable various functions of the related modules, to achieve hardware-level isolation, implement real module disabling, and further protect privacy security of a user.

The electronic device control method provided in this embodiment of this application may be applied to the electronic device, for example, a mobile phone, a tablet computer, or a wearable device. The electronic device may alternatively be a foldable device.

FIG. 2 is a diagram of an architecture of a system to which an electronic device control method is applicable according to an embodiment of this application. Based on the system architecture shown in FIG. 2, the electronic device may include a trusted execution environment TEE. The TEE is relative to a rich execution environment (rich execution environment, REE). The REE is an open environment in an operating system. A system running in the REE is referred to as a rich OS or a REEOS, and an application or a program running in the REE may be referred to as a client application (Client APP, CA). Due to openness of the REE, the REE is vulnerable to attacks from malicious software or programs. As a result, an insecurity event such as theft of sensitive data, abuse of digital rights, or theft of mobile payment occurs, affecting security of the electronic device. Compared with the REE, the TEE can improve security of the electronic device. A system running in the TEE may be referred to as a trusted OS or a TEEOS, and an application or a program running in the TEE may be referred to as a trusted application TA (Trust APP). By applying the TEE, hardware and software resources of the electronic device may be divided into a secure world (Secure World) and a normal world (Normal World). The secure world may be used to store important information of the electronic device, for example, a password, a fingerprint, and face information. Therefore, as shown in FIG. 2, the electronic device may include a TEE module, a driver module, and a target module. As a central system, the TEE module is mainly responsible for information relaying, user identity authentication, information processing, and the like. The driver module is deployed in the TEE module, and is responsible for executing various signals delivered by the TEE module, performing power-on and power-off of related modules, performing signal verification in a data processing process, and the like. The target module may be a module that is disabled when privacy protection needs to be performed, for example, a camera module, a microphone module, a positioning module, or a Near Link (Near Link) module. A control switch of the target module may be configured in the TEE module. In a process of controlling the target module to be powered off, the driver module may drive, based on a power-off instruction sent by the TEE module, to turn off the control switch of the target module, thereby powering off the target module.

Based on the system architecture shown in FIG. 2, when a target event occurs, the TEE module may receive a message that the target event occurs and that is sent by a privacy mode CA. The target event may be an event for which execution of a power-off operation on the target module needs to be triggered. Generally, when the target event occurs, it may indicate that the user no longer needs to use the electronic device or the related target module in the electronic device in this case. To protect user privacy, running of the target module needs to be terminated in this case. For example, the target event may be an event that the foldable device is folded. When the foldable device is folded, that is, the foldable device is converted from an unfolded state to a folded state, it may indicate that the user no longer uses the foldable device currently. In this case, running of some target modules may be stopped.

The message that the target event occurs may be detected by the privacy mode CA through listening, and the privacy mode CA may notify the TEE module of the detected message that the target event occurs. In addition, the privacy mode CA may notify the target module that the target event occurs on the electronic device in this case, and the target module performs power-off preparation. In this embodiment of this application, power-off preparation of the target module may be context protection processing of the target module, to ensure that another module associated with the target module can continue to run normally after the target module is powered off.

In a possible implementation of this embodiment of this application, the context protection of the target module may include: terminating a service currently executed by the target module, and storing key data of the service; or decoupling the target module from another module; or decoupling each module in the target module. By terminating the currently executed service and storing the key data of the service, a problem of data loss caused by sudden power-off of the target module can be avoided. By decoupling the target module from another module, a problem that another module associated with the target module cannot run normally after the target module is powered off can be avoided. By decoupling each module in the target module, each module in the target module can be protected, and a probability that the target module cannot be started after being powered on again can be reduced.

After the target module completes context protection, the target module may feed back a message to the TEE module by using the privacy mode CA, and the privacy mode CA notifies the TEE module of information that the target module has completed power-off preparation work. In this case, the privacy mode TA in the TEE module may notify the driver module to power off the target module. The target module after power-off is unavailable, and the electronic device enters a privacy mode. In the privacy mode, the disabled electronics cannot be restarted. Because the target module has been physically powered off, any software level operation cannot control the target module. Therefore, even if the electronic device is intruded by an illegal application or an illegal program, the illegal application or the illegal program cannot start the disabled target module in the privacy mode. In this way, user privacy can be fully protected, and the target module is prevented from being illegally started when the user is unaware.

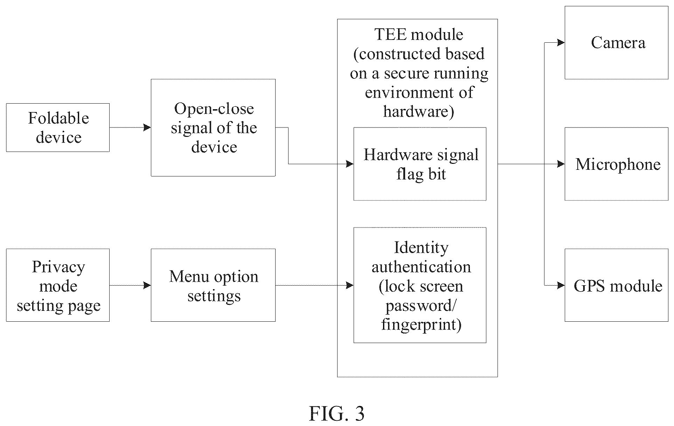

FIG. 3 is a diagram of an electronic device control method according to an embodiment of this application. FIG. 3 is a schematic flowchart of implementing, on a foldable device, an electronic device control method according to an embodiment of this application. Specifically, an example shown in FIG. 3 is a procedure of powering off a camera, a microphone, and a global positioning system (global positioning system, GPS) module by applying this method on the foldable device, to protect user privacy.

As shown in FIG. 3, the foldable device may provide a setting interface, and the setting interface may include a plurality of menu options. A user may operate on the interface, to enable a privacy protection option. For example, the privacy protection option may be a "folding protection" option. After the "folding protection" option is enabled, it indicates that after the foldable device is folded, the device enters a privacy protection state. In this state, some modules of the foldable device are disabled. The disabled modules may be sensitive modules in the foldable device, and these sensitive modules may be configured to obtain sensitive information or privacy information of the user. For example, image and sound information of the user is obtained, and current locations of the user and the foldable device are positioned. For example, as shown in FIG. 3, the modules disabled in the privacy protection state may include the camera, the microphone, the GPS module, and the like.

In a possible implementation of this embodiment of this application, when the user enables the privacy protection option by using the setting interface, the foldable device may describe a privacy protection function by using a pop-up window, to describe a "folding protection" function. After the foldable device receives confirmation information of the user, the foldable device formally enters the privacy protection state.

In another possible implementation of this embodiment of this application, when the user enables the privacy protection option on the foldable device, an identity of the user may be further authenticated. For example, identity authentication on the user may be implemented by verifying a lock screen password and/or a fingerprint of the foldable device. Data generated in the identity authentication process may be processed in the TEE module, to ensure security of the authentication process.

When the foldable device is folded, an open-close signal is generated, and may indicate that the foldable device is converted from an unfolded state to a folded state. The open-close signal may be generated by modifying a flag bit of a hardware signal when a folding event occurs. The open-close signal is sent to the TEE module. After receiving the open-close signal, the TEE module indicates the target module to perform power-off preparation. To be specific, the TEE module notifies the camera, the microphone, and the GPS module shown in FIG. 3 to perform context protection. The target module is powered off after the target module completes a series of context protection operations, so that impact of sudden power-off of the target module on normal work of another module and normal running of a system can be alleviated.

After the target module completes context protection, it indicates that the power-off preparation work of the target module is completed, and a message that the target module completes power-off preparation may be transferred to the TEE module by using the privacy mode CA. In this case, the TEE module may notify the driver module of the message that context protection is completed, and the driver module powers off the target module.

In a possible implementation of this embodiment of this application, when there are a plurality of target modules, each message that the target module completes context protection may be transferred to the TEE module by using the privacy mode CA, and each message that the target module completes context protection may be separately sent by the privacy mode CA to the TEE module. After receiving any message that the target module completes context protection, the TEE module may notify the driver module of the message. In this case, the driver module may record the received message, and is in a waiting state. After the driver module receives all messages that the target module completes context protection, the driver module may power off each module. Alternatively, after receiving any message that the target module completes context protection and that is sent by the privacy mode CA, the TEE module may record the message, and is in the waiting state. After receiving all the messages that target module completes context protection, the TEE module sends the messages to the driver module.

In another possible implementation of this embodiment of this application, when there are a plurality of target modules, if the TEE module still does not receive, within a specific time, a message that a specific target module completes context protection and that is transferred by the privacy mode CA, the TEE module may directly send a message to the driver module, and the driver module powers off the target module. For example, after the privacy mode CA sends a power-off preparation notification to the target module, if the TEE module still does not receive, within x seconds, the message that the target module completes context protection, the TEE module may directly send a message to the privacy mode driver module, and the driver module powers off the target module. A value of x may be set based on an actual requirement. This is not limited in this embodiment of this application.

After the target module is powered off, the foldable device enters the privacy mode. In the privacy mode, each target module cannot be started. For example, the camera, the microphone, and the GPS module in FIG. 3 are in a power-off state in the privacy mode and cannot be enabled.

In a possible implementation of this embodiment of this application, to improve smoothness of using the foldable device by the user and improve performance of the foldable device, control switches of the plurality of target modules may be integrated at a same port in the TEE module. The port may be a general purpose input/output port (general purpose input/output port, GPIO). In this way, the driver module may power off the plurality of target modules simultaneously, to ensure timing consistency of the plurality of target modules, thereby improving security performance of the foldable device.

With reference to specific examples, the following describes a specific implementation process of the electronic device control method provided in embodiments of this application. Similar to the example in FIG. 3, an example in which the electronic device is a foldable device is still used for description in subsequent examples.

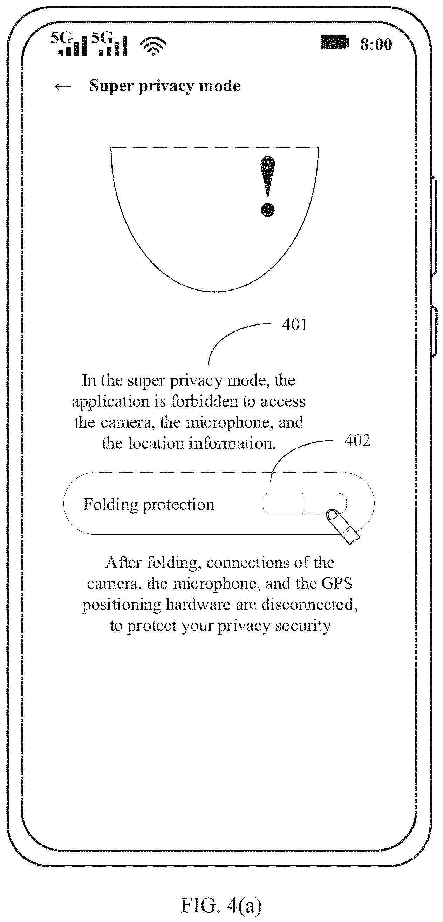

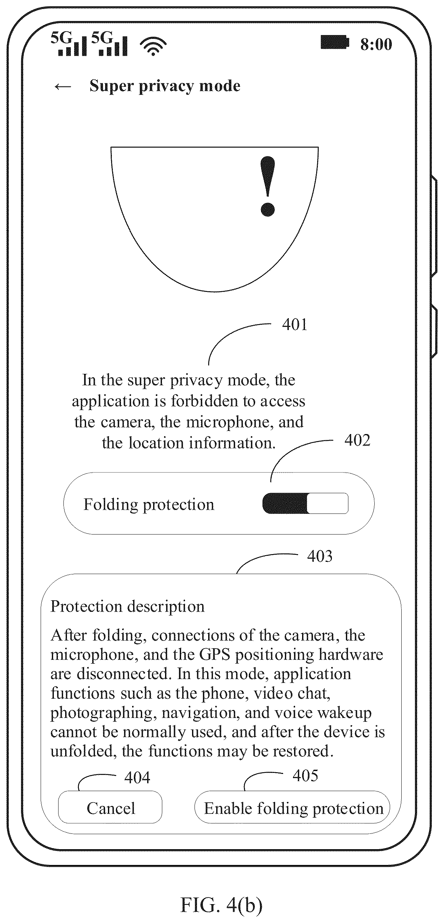

FIG. 4(a) and FIG. 4(b) are a diagram of an interface operation for enabling privacy protection according to an embodiment of this application. The foregoing privacy protection may be "folding protection" of the foldable device, that is, a privacy protection function implemented by the foldable device in a folded state. FIG. 4(a) shows a diagram of a setting page of a privacy mode. The privacy mode may be a "super privacy mode" in FIG. 4(a). The user may enter the "super privacy mode" setting page by using a setting page of the foldable device. On the setting page, description information 401 of the "super privacy mode" and a "folding protection" option 402 may be displayed. The description information 401 may be used to describe the "super privacy mode". For example, as shown in FIG. 4(a), the description information 401 may be the following content: In the super privacy mode, the application is forbidden to access the camera, the microphone, and the location information. The user may operate on the "folding protection" option 402, to enable "folding protection". After the user selects to enable the "folding protection" option, the foldable device may describe specific protection content in a form of a pop-up window. As shown in FIG. 4(b), a pop-up window 403 displays a protection description after "folding protection" is enabled, that is, "After folding, connections of the camera, the microphone, and the GPS positioning hardware are disconnected. In this mode, application functions such as the phone, video chat, photographing, navigation, and voice wakeup cannot be normally used, and after the device is unfolded, the functions may be restored." In the pop-up window 403, the foldable device may provide two options, namely, a "cancel" option 404 and an "enable folding protection" option 405. After reading the protection description displayed in the pop-up window 403, the user may select to enable folding protection or cancel folding protection. After the user selects the "enable folding protection" option 405, the foldable device formally enables the "folding protection" function. After the "folding protection" function is enabled, the device formally enters the "super privacy mode" when the foldable device is folded. In the super privacy mode, the foldable device disconnects the connections of the camera, the microphone, and the GPS positioning hardware. The application functions such as the phone, video chat, photographing, navigation, and voice wakeup of the foldable device cannot be normally used.

In this embodiment of this application, when the user enables folding protection, the protection description is displayed to the user by using the pop-up window, so that the user can fully understand the function. In addition, through two confirmations, the user can also be prevented from entering the setting page of the privacy mode due to an accidental touch, so that the user can exit the page at any time, thereby improving use experience of the user.

In a possible implementation of this embodiment of this application, when the user operates the foldable device to exit "folding protection", the foldable device may also perform verification for a plurality of times, to avoid exiting "folding protection" due to an operation not performed by the user, and enhance security performance of the foldable device.

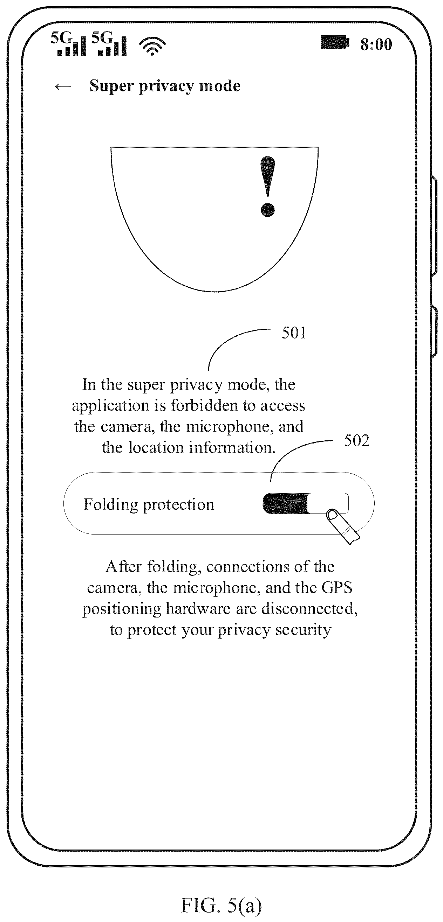

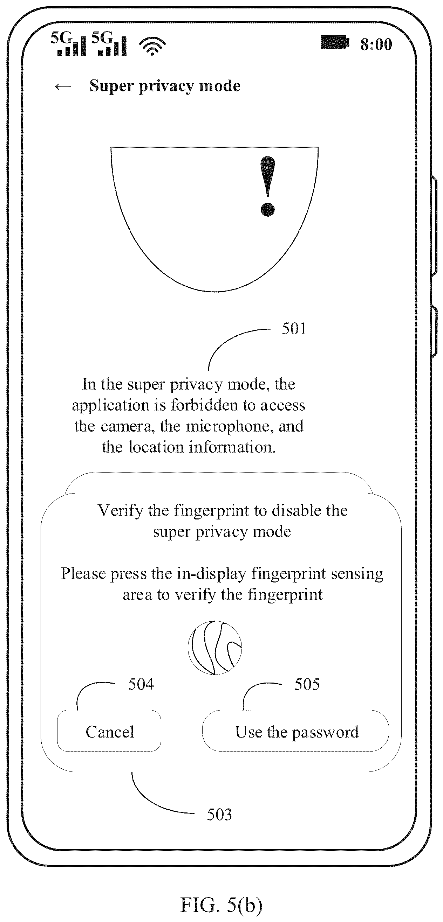

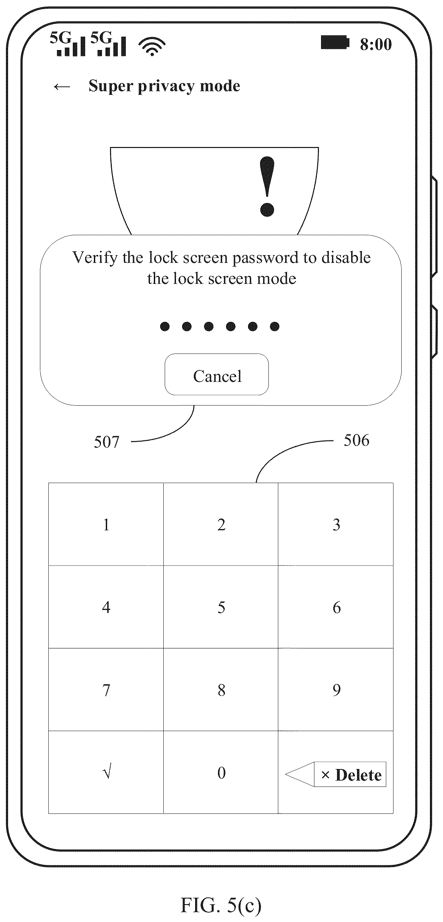

FIG. 5(a), FIG. 5(b), and FIG. 5(c) are a diagram of an interface operation for disabling privacy protection according to an embodiment of this application. FIG. 5(a) is a diagram of a setting page of a super privacy mode after "folding protection" is enabled. Description information 501 of the "super privacy mode" is displayed on the setting page. On the setting page shown in FIG. 5(a), a "folding protection" option 502 is in an enabled state. The user may operate on the option 502, to disable "folding protection". When the user disables "folding protection", the foldable device may perform identity authentication on the user. In a possible implementation, when the user disables "folding protection", the foldable device may first perform first verification. For example, a fingerprint service is initiated by using a pop-up window, to request the user to verify a fingerprint. For example, as shown in FIG. 5(b), the foldable device displays a pop-up window 503, requiring to verify the fingerprint of the user. The pop-up window 503 displays description information about how to perform fingerprint verification, and provides both a "cancel" option 504 and a "use the password" option 505, so that the user exits first verification, or the user is allowed to perform first verification by using the password. Assuming that the user continues to perform first verification by using the fingerprint, after fingerprint verification of the user succeeds, the foldable device may perform secondary verification. Secondary verification may be a verification manner different from first verification. For example, secondary verification may be password verification. For example, after first fingerprint verification of the user succeeds, as shown in FIG. 5(c), the foldable device may display a virtual keyboard 506 and a password verification pop-up window 507, for the user to perform password verification. If first verification and secondary verification of the user both succeed, the foldable device may exit the "super privacy mode". In an example, if first verification or secondary verification of the user does not succeed, the foldable device requires the user to perform verification again. When verification fails for a plurality of times, for example, the user fails in verification for three times during first verification or secondary verification, the foldable device may be automatically locked for a period of time, for example, five minutes or ten minutes. The user is allowed to continue to perform verification only after five minutes or ten minutes. In another example, to protect device security and user privacy, when verification fails for a plurality of times, a time for automatically locking the foldable device may continue to be prolonged. In this way, security of the foldable device can be further improved through first verification and secondary verification, so that information leakage caused by a device loss or an operation not performed by the user can be avoided.

To avoid a case in which another associated module or component may not work normally because the target module is forcibly disconnected by using hardware, the foldable device may send a message to the target module after receiving the open-close signal, to notify the target module to perform power-off preparation. After the target module completes power-off preparation, the TEE module sends the power-off instruction to the driver module, and the driver module turns off the control switch of the target module. In a possible implementation of this embodiment of this application, if there are a plurality of target modules, control switches of the plurality of target modules may be integrated at a same port in the TEE module. In this way, the plurality of target modules may be powered off simultaneously under driving of the driver module. When the device is unfolded and needs to restore a function of the target module, the driver module can also power on the plurality of target modules simultaneously, to ensure timing consistency of the plurality of modules in power-on and power-off processes.

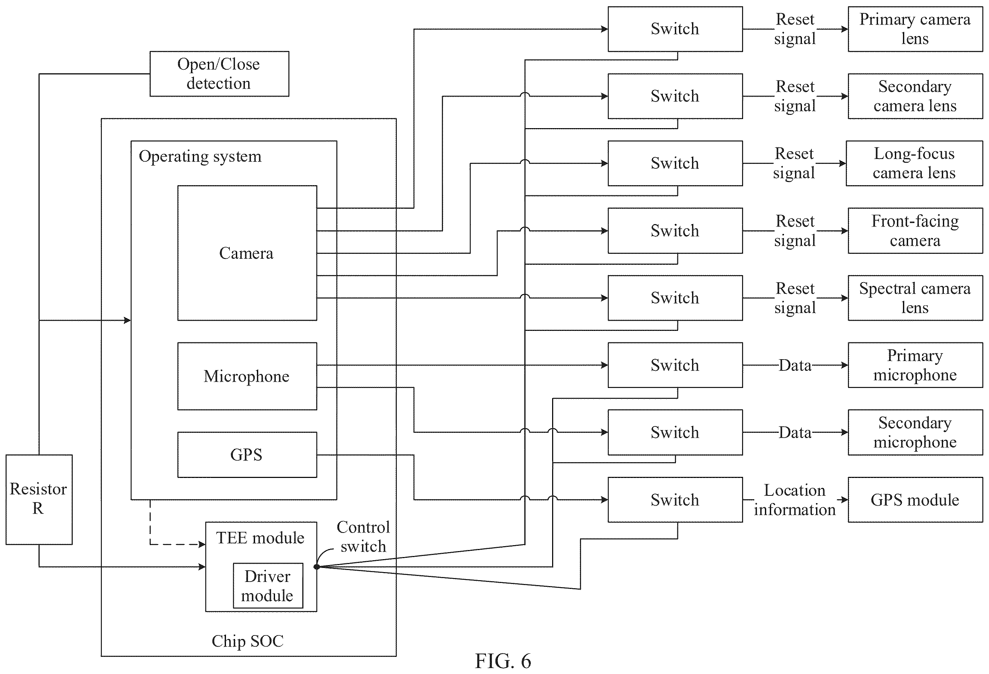

FIG. 6 is a diagram of a control logic of target modules according to an embodiment of this application. In FIG. 6, the target modules include a camera, a microphone, and a GPS module. The camera may include a plurality of camera lenses, for example, a primary camera lens, a secondary camera lens, a long-focus camera lens, a front-facing camera lens, and a spectral camera lens. The microphone may include a primary microphone and a secondary microphone. Software control switches of the foregoing modules may be connected to a chip SOC, and the chip implements connection and disconnection of the modules in the sense of software. In addition, as shown in FIG. 6, control switches of the modules may also be configured in the TEE module of the foldable device, and the control switches in the TEE module may be integrated at a same port. When the foldable device is folded, the open-close signal of the device is immediately transferred to the TEE module. After processing, the TEE module may send the power-off instruction to the driver module. The driver module may turn off the control switches configured in the TEE module, to power off the plurality of the modules simultaneously.

For ease of understanding, the following describes, with reference to a power-off process of the GPS module, the foregoing control process by using a specific example.

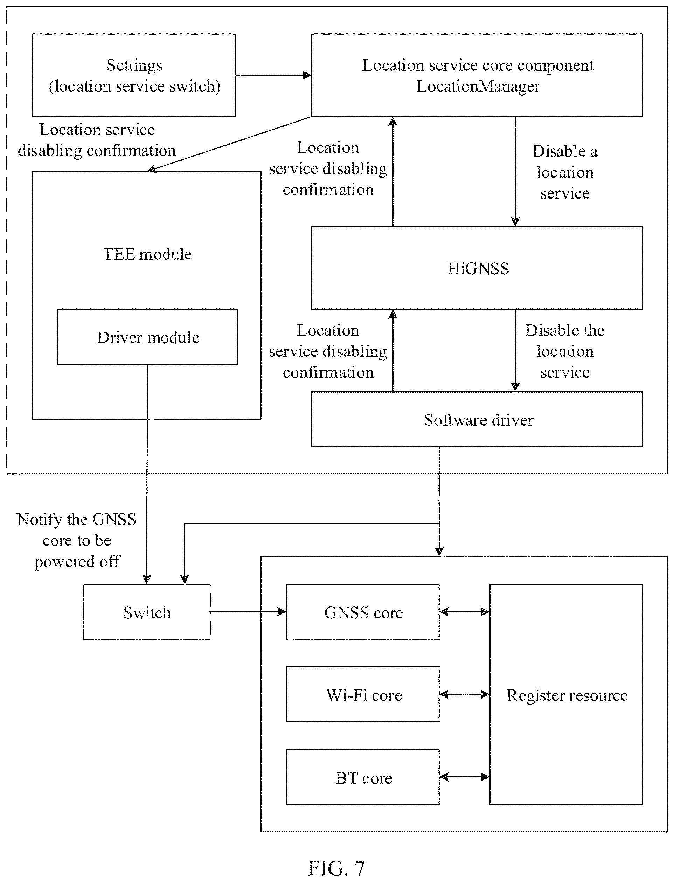

FIG. 7 is a diagram of controlling a GPS module to be powered off according to an embodiment of this application. FIG. 7 shows an example of a process in which the GPS module is controlled, in a hardware control manner, to be powered off by using the method provided in this embodiment of this application. Refer to FIG. 7. The user may disable a location service by using a location service switch provided on a setting page related to the foldable device. In this case, information that the location service is disabled is transferred to a location service core component LocationManager. Then, the LocationManager component sends the information that the location service is disabled to a related component HiGNSS in the chip SOC for implementing the location service. The HiGNSS component notifies a software driver to disable the location service. After the location service is disabled, the software driver sends confirmation information to the LocationManager component, to confirm disabling of the location service.

In addition, as shown in FIG. 7, after confirming that the location service is disabled, the LocationManager component may send confirmation information to the TEE module, and the TEE module controls, in the hardware control manner, the GPS module to be powered off by using the control method provided in this embodiment of this application. In other words, after receiving the location service disabling confirmation information sent by the LocationManager component, the TEE module sends the power-off instruction to the driver module, to directly power off a GNSS core that can implement a location service related function. In this way, use of the GPS module can be thoroughly disconnected, to ensure privacy security of the user.

In this embodiment of this application, control over the target module may be implemented based on the TEE module. When the target module needs to be disabled, the target module may be powered off at a physical level, so that any software level instruction cannot control the target module. The driver module configured to drive the target module to be powered on or powered off is deployed in the TEE module. The driver module receives only a signal transmitted by a trusted application, and another interface or application of the device cannot access the driver module. To ensure security of the control process, a permission verification process may be added for communication between modules.

In a possible implementation of this embodiment of this application, in the super privacy mode, a service manager accesses the driver module. The TEE module may verify a key carried in information transmitted in an access process of the service manager. The key may include a plurality of different types of keys, for example, a universally unique identifier (universally unique identifier, UUID), a permission group key, or a scene ID. In a verification process, the TEE module allows the service manager to access the driver module only when verification on the plurality of types of keys succeeds.

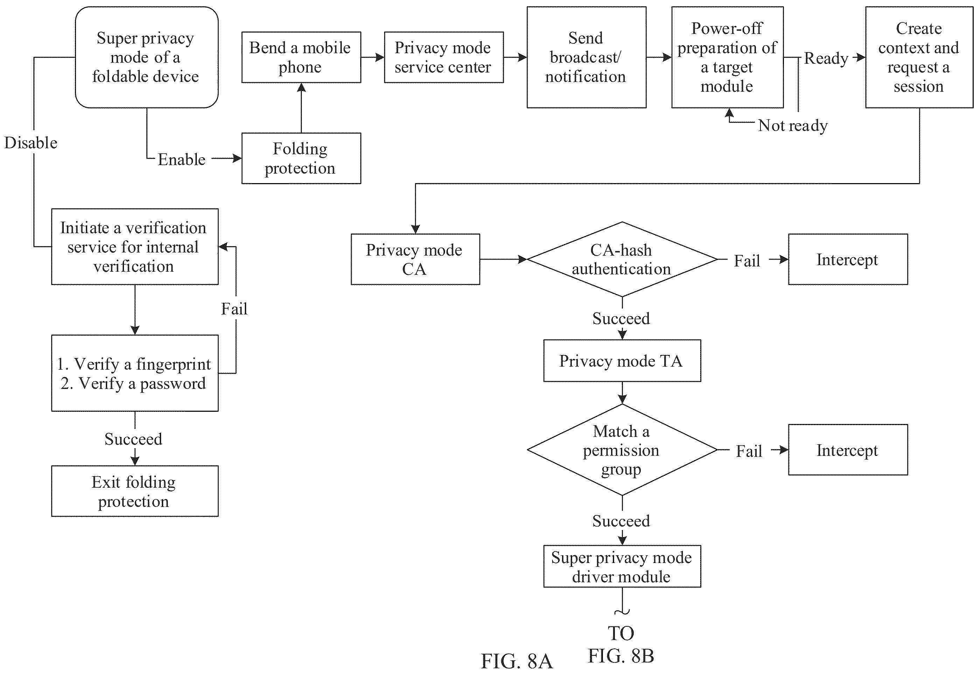

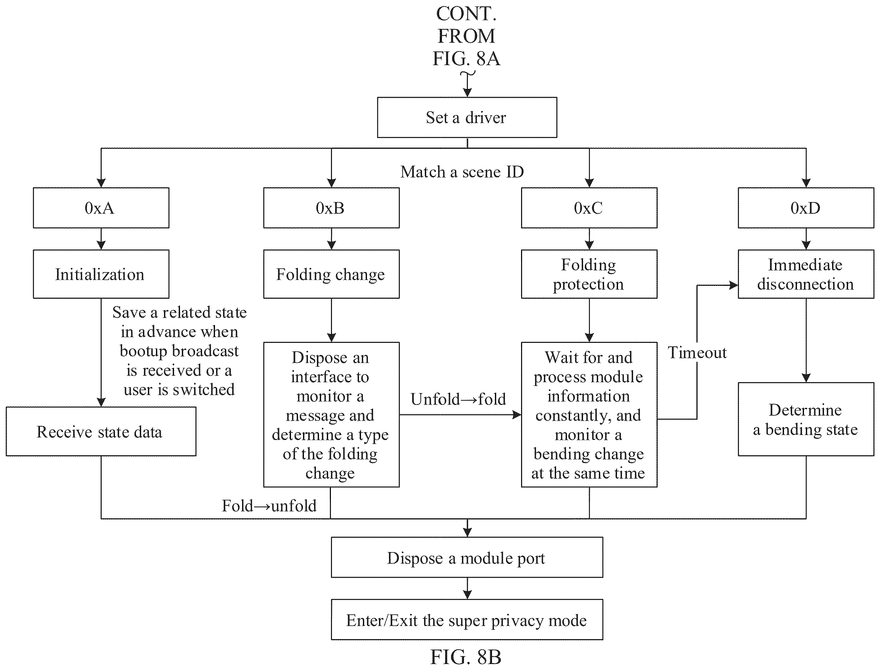

FIG. 8A and FIG. 8B are a diagram of a permission verification procedure according to an embodiment of this application. Based on the procedure shown in FIG. 8A and FIG. 8B, after the "folding protection" function of the foldable device is enabled, when the foldable device is bent, the device is triggered to enter the super privacy mode. In the super privacy mode, a privacy mode service center may send a message to the target module, to notify the target module to perform power-off preparation. After each target module completes power-off preparation, context (context) may be created and a session (session) is requested. Then, the privacy mode CA may perform permission verification based on a logical model. As shown in FIG. 8A and FIG. 8B, the privacy mode CA may first perform hash authentication, and if hash authentication fails, directly intercept an access request. If hash authentication succeeds, the privacy mode TA may continue to perform permission group matching. If permission group matching fails, the access request may be intercepted. If permission group matching succeeds, a super privacy mode driver module may set a driver, and continue to perform scene matching.

In a possible implementation of this embodiment of this application, a plurality of logics may be set for the driver module, to cope with different scenes in the super privacy mode. FIG. 8A and FIG. 8B show an example of accessing the driver module in four different scenes. The four scenes are separately configured with different scenes IDs. A corresponding operation is allowed to be performed only when a scene ID carried by an access program uniquely matches an ID of a particular type of scene. As shown in FIG. 8A and FIG. 8B, the four scenes may include:
Scene 1: initialization. A corresponding scene ID is 0xA. The function of powering off the target module is used when system bootup broadcast is received, or an operation such as switching a user or using private space is performed. A privacy mode state is saved in advance. After the system is switched, a value may be reassigned. In addition, an unconditional restoration interface is provided. When the privacy mode state is disordered due to a system scheduling problem, the privacy mode state may be restored through initialization.
Scene 2: folding change. A corresponding scene ID is 0xB. A folding change interface is configured to: monitor folding information of the foldable device and determine a type of the folding change. Specifically, if the type is a fold-unfold change, that is, the foldable device changes from the folded state to the unfolded state, the foldable device may directly exit the super privacy mode. If the type is an unfold-fold change, that is, the foldable device changes from the unfolded state to the folded state, the foldable device may enter a folding protection state and wait for the module to complete context protection. In addition, when the open-close signal is inconsistent with a bending hardware signal obtained inside the driver, a related warning prompt (prompting that the system may be intruded, or the like) may be obtained.
Scene 3: folding protection. A corresponding scene ID is 0xC. After folding protection is enabled, when the folding status of the foldable device changes, a signal transferred by the target module may be received and recorded. When all target modules complete preparation, a power-off operation (entering a super privacy state) is performed, and a bending signal change is monitored at the same time. When the bending signal changes, all flag bits are cleared and a signal transferred by each target module is re-recorded.
Scene 4: Power off immediately when a wait timeout occurs. A corresponding scene ID is 0xD. When the privacy mode service center notifies all the target modules to perform context protection and enter the privacy mode, if no signal indicating that the target module completes context protection is received within x seconds, all the target modules may be disconnected immediately and enter the super privacy state.

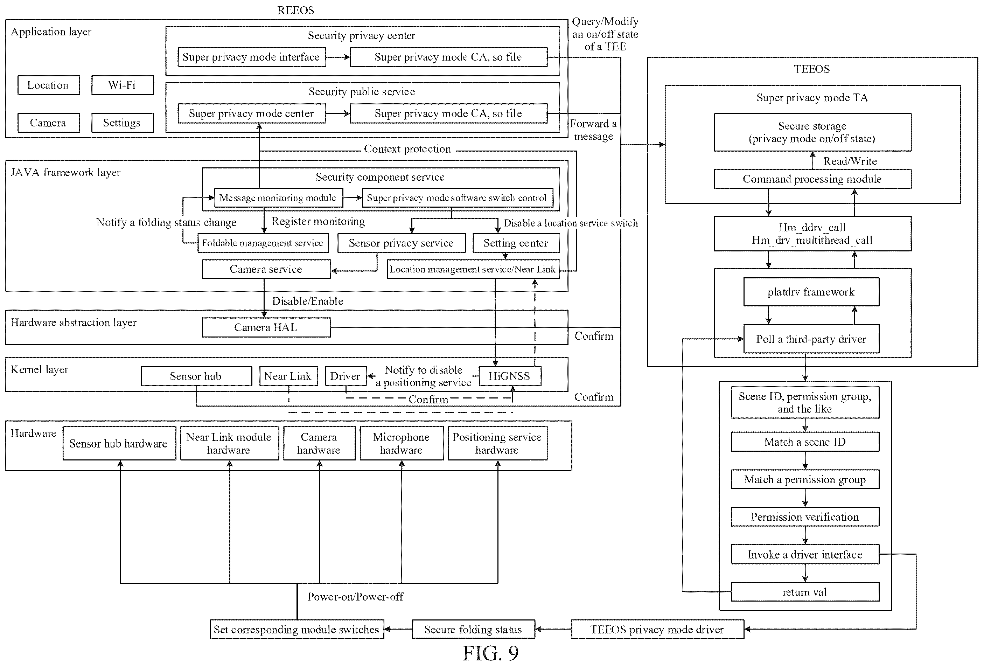

For ease of understanding, the following describes, with reference to a complete example, the electronic device control method provided in this embodiment of this application. FIG. 9 is a schematic flowchart of an electronic device control method according to an embodiment of this application. The electronic device related in the procedure shown in FIG. 9 is a foldable device, and a target event may be an event that the foldable device is folded. In other words, FIG. 9 shows a procedure of controlling each target module of the electronic device by using the method provided in this embodiment of this application when the foldable device is folded. The target modules in the schematic flowchart shown in FIG. 9 may include a camera module, a microphone module, a positioning module, a Near Link module, and a sensor hub (sensohub). The sensor hub may be configured to uniformly manage various sensors in the foldable device. A conventional sensor directly exchanges data with a CPU, and many algorithms (such as a 9-axis algorithm, a 6-axis algorithm, and a gesture algorithm) are run on an application processor (application process, AP) side. For example, an operating system, a user interface, and an application of the foldable device are all executed on an AP, causing high power consumption of the CPU. In addition, each algorithm stops running after the electronic device enters a sleep mode. Sensors that originally interact with the CPU directly are processed by the sensor hub in a centralized manner, and then the sensor hub interacts with the CPU, so that CPU load can be reduced. In addition, after the electronic device enters the sleep mode, the sensor hub may also continue to work.

As shown in FIG. 9, a foldable management service in the foldable device may collect folding status information of the foldable device in a centralized manner and perform subsequent logic processing. When the folding status of the foldable device changes, the foldable management service may notify each related module of the folding status information through broadcasting. For example, when the foldable device changes from the unfolded state to the folded state, the foldable management service may notify a message monitoring module in a security component service of the folding status information. After receiving the information broadcast by the foldable management service, the message monitoring module may determine a current state of the foldable device, and perform corresponding logic processing.

When the folding status information is folded state information indicating that the foldable device changes from the unfolded state to the folded state, the message monitoring module may distribute the folded state information. For example, as shown in FIG. 9, the message monitoring module may distribute the folded state information to a super privacy mode center in a security public service and a super privacy mode software switch control module in the security component service.

The super privacy mode center may transmit the information to a super privacy mode CA through broadcasting, and then the super privacy mode CA transmits the information to a super privacy mode TA. After verifying the information in a verification manner such as a UUID or a permission group, a command processing module in the super privacy mode TA may transfer the information to a super privacy mode driver. In addition, after receiving the information, the super privacy mode software switch control module in the security component service may transfer the folded information to each related module. In this case, the foldable device may enter a privacy mode, and power off each target module. Before being powered off, each target module may perform power-off preparation, that is, complete context protection processing before power-off.

As shown in FIG. 9, the super privacy mode software switch control module may transfer the folded information to a sensor privacy service and a setting center. The sensor privacy service may send the folded information to a camera service, and the camera service distributes a message to each underlying service, that is, a service that needs to be disabled in the camera service. In this process, each service performs power-off preparation, performs context protection, and packages important information. After the underlying services complete context protection, confirmation messages may be aggregated to a camera service center and notified to a security privacy center. After receiving the messages, the security privacy center notifies the super privacy mode TA and the privacy mode driver.

After the super privacy mode software switch control module sends the folded information to the setting center, the setting center may disable the location service based on the received information, and notify the Near Link module, the sensor hub, and the positioning module to perform context protection. After each target module completes context protection, the Near Link module and the positioning module may send a confirmation signal to a location management service. The confirmation signal may be transferred to the privacy mode CA. The camera module and the sensor hub may directly send a signal to the privacy mode CA. The privacy mode CA may be in a waiting state. Once receiving each message that the target module completes context protection, the privacy mode CA may send a confirmation signal to a privacy mode driver module, and the driver module performs subsequent processing.

The privacy mode driver may perform determining once each time a signal is received. After all the target modules are ready, the driver module may power off each target module, and the foldable device enters a "super" privacy state.

In a possible implementation of this embodiment of this application, the folding status information received by the foldable management service may be unfolded state information indicating that the foldable device changes from the folded state to the unfolded state. In this case, a power-on operation needs to be performed on each target module, and after a short delay, the privacy mode driver notifies each target module to restore running. In this way, it can be ensured that each target module is restored in a secure power-on state of the component, and a security problem such as a system freeze and function unavailability caused by direct restoration of each target module before power-on because each target module receives the unfolded state information earlier than the privacy mode driver when a timing conflict occurs is avoided.

Based on the method provided in this embodiment of this application, in an operation process of powering on or powering off each target module when the folding status of the foldable device changes, accuracy of information transfer should be ensured, and collaboration between software and hardware is required. When a user repeatedly folds the device, a folding signal and a signal indicating that each target modules perform context protection may be disordered, causing a fault on the foldable device. For this problem, in this embodiment of this application, secondary verification confirmation may be performed before the super privacy mode CA transfers information to the super privacy mode TA. It is confirmed whether the folding status indicated by the information transferred to the super privacy mode TA is consistent with the folding status indicated by the information broadcast by the foldable management service.

In a possible implementation of this embodiment of this application, when the foldable device is folded, each target module may record a current on/off state, and then start to disable a related function. After the foldable device is unfolded, each target module may restore the previously recorded on/off state.

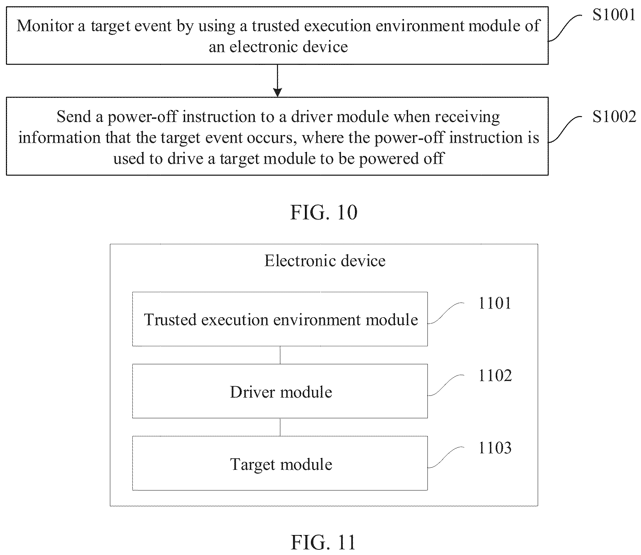

With reference to the descriptions of the foregoing embodiments, FIG. 10 is a diagram of steps of an electronic device control method according to an embodiment of this application. The method may include the following steps.

S1001: Monitor a target event by using a trusted execution environment module of the electronic device.

The electronic device in this embodiment of this application may include an electronic device such as a mobile phone, a tablet computer, or a wearable device. The electronic device may alternatively be a foldable device, for example, a foldable mobile phone.

The trusted execution environment module may be the TEE module in the foregoing embodiments. A driver module is deployed in the TEE module, and control switches of a plurality of target modules are configured in the TEE module. The control switches of the plurality of target modules may be integrated at a same port in the TEE module.

In a possible implementation of this embodiment of this application, the target module may include a camera module, a microphone module, a positioning module, a Near Link module, or a sensor hub, that is, the camera, the microphone, the GPS module, the Near Link module, and the sensor hub module in the foregoing embodiments.

The target event may be an event for which corresponding protection needs to be performed on the electronic device after the event occurs, to prevent user privacy leakage.

In an example, the electronic device may be the foldable device, and the target event for the foldable device may be that the foldable device changes from an unfolded state to a folded state. Therefore, monitoring the target event by using the TEE module of the electronic device may be receiving, by using the TEE module of the foldable device, an open-close signal that is of the foldable device and that is sent by a privacy mode CA. The open-close signal may represent that the foldable device is converted from the unfolded state to the folded state. When the TEE module receives the open-close signal, it may be considered that the target event occurs, and the TEE module needs to perform further protection on the target event.

In a possible implementation of this embodiment of this application, after the open-close signal that is of the foldable device and that is sent by the privacy mode CA is received by using the TEE module of the foldable device, because the open-close signal is a software signal, the foldable device may further obtain a bending hardware signal, where the bending hardware signal may be a hardware signal representing that the foldable device is converted from the unfolded state to the folded state. If the open-close signal received by the TEE module is consistent with the obtained bending hardware signal, it is determined that the target event occurs.

S1002: Send a power-off instruction to the driver module when receiving information that the target event occurs, where the power-off instruction is used to drive the target module to be powered off.

In this embodiment of this application, sending, by the TEE module, the power-off instruction to the driver module after receiving the information that the target event occurs may be implemented in a privacy mode. The privacy mode may be the privacy mode or the super privacy mode described in the foregoing embodiments. In the privacy mode, when the TEE module receives the information that the target event occurs, the TEE module may send the power-off instruction to the driver module, and the driver module drives to turn off the control switch of the target module, thereby powering off the target module.

In a possible implementation of this embodiment of this application, the control switches of the plurality of target modules may be integrated at a same port in the TEE module. Therefore, when driving, based on the power-off instruction, the plurality of target modules to be powered off, the driver module may simultaneously drive to turn off the control switches of the plurality of target modules, so that the plurality of target modules are powered off simultaneously, thereby ensuring timing consistency.

In another possible implementation of this embodiment of this application, sending the power-off instruction to the driver module when receiving the information that the target event occurs includes: when receiving the information that the target event occurs, broadcasting the information to the target module by using the privacy mode CA, where the information may indicate the target module to perform power-off preparation; and when receiving information that the power-off preparation is completed and that is fed back by the target module by using the privacy mode CA, sending the power-off instruction to the driver module.

To be specific, when the TEE module receives the information that the target event occurs and that is sent by the privacy mode CA, the privacy mode CA also immediately indicates, in a broadcast form, each target module to perform the power-off preparation. After completing the power-off preparation, each target module may feed back a message that preparation is completed to the privacy mode CA, and the privacy mode CA may send, to the TEE module, the message that preparation is completed and that is fed back by each target module. After all the target modules complete the power-off preparation, the TEE module sends the power-off instruction to the driver module. In this way, a problem that another associated module or a system cannot run normally and that is caused by sudden power-off of the target module because the TEE module directly sends the power-off instruction to the driver module can be avoided.

In this embodiment of this application, after the privacy mode CA broadcasts, to the target module, the information that the target event occurs, if the TEE module does not receive the information that power-off preparation of the target module is completed and that is fed back by the privacy mode CA, the TEE module may send the power-off instruction to the driver module at a preset moment after the privacy mode CA broadcasts the target event. The preset moment may be a time point after the privacy mode CA broadcasts the target time, for example, x seconds. After the privacy mode CA broadcasts the target event to the target module, if the TEE module still does not receive, after waiting for x seconds, the message that power-off preparation of the target module is completed and that is fed back by the privacy mode CA, the TEE module may send the power-off instruction to the driver module, and the driver module turns off the control switch of the target module, to power off the target module. A value of x may be determined based on an actual requirement. This is not limited in this embodiment of this application.

In a possible implementation of this embodiment of this application, the power-off preparation completed by the target module may include at least one of the following processing: terminating a service currently executed by the target module, and storing key data of the service; or decoupling the target module from another module; or decoupling each module in the target module.

In this embodiment of this application, when the TEE module sends the power-off instruction to the driver module, the TEE module may further verify the target event, to confirm authenticity of the target event that occurs.

In a possible implementation of this embodiment of this application, when the TEE module receives the information that the target event occurs, the TEE module may further obtain a key carried in information indicating the target event. The information indicating the target event may be information transferred in a process in which another application accesses the driver module. The TEE module may verify the target event based on the key carried in the information. If verification on the target event succeeds, it indicates that the target event is authentic and reliable. For example, the foldable device indeed changes from the unfolded state to the folded state. In this case, the TEE module sends the power-off instruction to the driver module.

When the target event is verified based on the key carried in the information indicating the target event, the key may be matched with currently configured keys in the privacy mode; and if the key carried in the information successfully matches all the corresponding currently configured keys in the privacy mode, it may be determined that the verification on the target event succeeds; and otherwise, it is determined that the verification on the target event does not succeed. The key may include at least one of a UUID, a permission group key, or a scene ID.

In an example of this embodiment of this application, the TEE module may first match UUIDs, to determine whether the UUIDs are the same. If the UUIDs are different, the TEE module may not send the power-off instruction to the driver module. If the UUIDs are the same, the TEE module may continue to match permission group keys. When matching between the permission group keys does not succeed, the TEE module continues to match scene IDs only after matching between the permission group keys succeeds. Otherwise, the TEE module may not send the power-off instruction to the driver module. After matching between the UUIDs, matching between the permission group keys, and matching between the scene IDs all succeed, the TEE module sends the power-off instruction to the driver module, and the driver module drives to turn off the control switch of each target module, thereby powering off each target module.

In embodiments of this application, functional modules of the electronic device may be obtained through division based on the foregoing method examples. For example, each functional module may be obtained through division based on each corresponding function, or one or more functions may be integrated into one functional module. It should be noted that, in embodiments of this application, division into the modules is an example and is merely logical function division, and may be other division in actual implementation. An example in which each functional module is obtained through division based on each corresponding function is used below for description.

Corresponding to the foregoing embodiments, FIG. 11 is a block diagram of a structure of an electronic device according to an embodiment of this application. The trusted execution environment module 1101 and the driver module 1102 in the foregoing embodiments may be configured in the electronic device. The driver module 1102 is deployed in the trusted execution environment module 1101, and a control switch of the target module 1103 is further configured in the trusted execution environment module 1101. When the trusted execution environment module 1101 receives information that a target event occurs, the trusted execution environment module 1101 may send a power-off instruction to the driver module 1102, where the power-off instruction may be used to drive the target module 1103 to be power off.

In a possible implementation of this embodiment of this application, there may be a plurality of target modules 1103, and control switches of the plurality of target modules 1103 may be integrated at a same port in the trusted execution environment module 1101. In this way, the power-off instruction may be used to simultaneously drive to turn off the control switches of the plurality of target modules 1103, so that the plurality of target modules 1103 are powered off simultaneously.

In a possible implementation of this embodiment of this application, the trusted execution environment module 1101 may be further configured to: when receiving the information that the target event occurs, broadcast, to the target module 1103 by using a privacy mode CA, the information that the target event occurs, where the information indicates the target module 1103 to perform power-off preparation; and when receiving information that the power-off preparation is completed and that is fed back by the target module 1103 by using the privacy mode CA, send the power-off instruction to the driver module 1102.

In a possible implementation of this embodiment of this application, the trusted execution environment module 1101 may be further configured to: if the information that the power-off preparation of the target module 1103 is completed and that is fed back by the privacy mode CA is not received, send the power-off instruction to the driver module 1102 at a preset moment after the privacy mode CA broadcasts the target event.

In this embodiment of this application, the power-off preparation may include at least one of the following processing:
terminating a service currently executed by the target module 1103, and storing key data of the service; or
decoupling the target module 1103 from another module; or
decoupling each module in the target module 1103.

In a possible implementation of this embodiment of this application, the trusted execution environment module 1101 may be further configured to: when receiving the information that the target event occurs, obtain a key carried in information indicating the target event; verify the target event based on the key; and if verification on the target event succeeds, send the power-off instruction to the driver module 1102.

Verifying the target event based on the key may include: matching the key with currently configured keys in a privacy mode; and if the key successfully matches all the corresponding currently configured keys in the privacy mode, determining that the verification on the target event succeeds; and otherwise, determining that the verification on the target event does not succeed.

In a possible implementation of this embodiment of this application, the key may include at least one of a UUID, a permission group key, or a scene ID.

In a possible implementation of this embodiment of this application, the electronic device may be a foldable device. When the electronic device is the foldable device, the trusted execution environment module 1101 may be further configured to receive an open-close signal of the foldable device, where the open-close signal may represent that the foldable device is converted from an unfolded state to a folded state.

In another possible implementation of this embodiment of this application, the trusted execution environment module 1101 may be further configured to obtain a bending hardware signal of the foldable device, where the bending hardware signal may be a hardware signal representing that the foldable device is converted from the unfolded state to the folded state, where when the open-close signal is consistent with the bending hardware signal, the target event occurs.

In a possible implementation of this embodiment of this application, the target module 1103 may include at least one of the following modules in the electronic device: a camera module, a microphone module, a positioning module, a Near Link module, or a sensor hub.

An embodiment of this application further provides an electronic device control apparatus. By applying the apparatus, steps or functions that can be implemented by related modules of the electronic device in the foregoing method embodiments can be implemented.

All related content of the steps in the foregoing method embodiments may be referenced to function descriptions of corresponding functional modules details are not described herein again.

An embodiment of this application further provides an electronic device. The electronic device may be the electronic device in the foregoing embodiments. The electronic device includes a memory, a processor, and a computer program that is stored in the memory and that can be run on the processor. When the processor executes the computer program, the electronic device control method in the foregoing embodiments may be implemented. In a possible implementation, the electronic device may be a foldable device.

An embodiment of this application further provides a computer-readable storage medium. The computer-readable storage medium stores computer instructions. When the computer instructions are run on an electronic device, the electronic device is enabled to perform the foregoing related method steps, to implement the electronic device control method in the foregoing embodiments.

An embodiment of this application further provides a computer program product. When the computer program product is run on a computer, the computer is enabled to perform the foregoing related steps, to implement the electronic device control method in the foregoing embodiments.

An embodiment of this application further provides a chip. The chip may be a processor, or the chip includes a processor. The processor may be a general-purpose processor, or may be a dedicated processor. The processor is configured to support the electronic device in performing the foregoing related steps, to implement the electronic device control method in the foregoing embodiments.

Optionally, the chip further includes a transceiver. The transceiver is configured to receive control from the processor, and is configured to support the electronic device in performing the foregoing related steps, to implement the electronic device control method in the foregoing embodiments.

Optionally, the chip may further include a storage medium.

The chip may be implemented by using the following circuits or devices: one or more field programmable gate arrays (field programmable gate array, FPGA), a programmable logic device (programmable logic device, PLD), a controller, a state machine, a gate logic, a discrete hardware component, any other proper circuit, or any combination of circuits that can perform the functions described throughout this application.

Finally, it should be noted that, the foregoing descriptions are merely specific implementations of this application, but are not intended to limit the protection scope of this application. Any variation or replacement within the technical scope disclosed in this application shall fall within the protection scope of this application.

## Claims

1. An electronic device control method, comprising:
powering off a target module when an electronic device changes from an unfolded state to a folded state, wherein the target module comprises at least one of a camera module, a microphone module, a positioning module, a Near Link module, or a sensor hub of the electronic device; and
powering on the target module when the electronic device changes from the folded state to the unfolded state.

2. The method according to claim 1, wherein powering off the target module when the electronic device changes from the unfolded state to the folded state comprises:
indicating the target module to perform power-off preparation when the electronic device changes from the unfolded state to the folded state; and
powering off the target module after the target module completes the power-off preparation.

3. The method according to claim 2, wherein the power-off preparation comprises at least one of the following processing:
terminating a service currently executed by the target module, and storing key data of the service; or
decoupling the target module from another module; or
decoupling each module in the target module.

4. The method according to claim 2 or 3, wherein powering off the target module after the target module completes the power-off preparation comprises:
turning off a control switch of the target module after the target module completes the power-off preparation, so that the target module is powered off, wherein the control switch of the target module is configured in a trusted execution environment of the electronic device.

5. The method according to claim 4, further comprising:
at a preset moment after the electronic device changes from the unfolded state to the folded state, if the target module does not complete the power-off preparation, directly powering off the target module.

6. The method according to claim 4 or 5, wherein there are a plurality of target modules, and control switches of the plurality of target modules are integrated at a same port of the trusted execution environment; and powering off the target module further comprises:
powering off the plurality of target modules simultaneously.

7. The method according to any one of claims 1 to 6, wherein after powering off the target module, the method further comprises:
entering, by the electronic device, a privacy mode, wherein in the privacy mode, the target module is in a power-off state and cannot be started.

8. The method according to claim 7, wherein before powering on the target module, the method further comprises:
exiting, by the electronic device, the privacy mode.

9. The method according to any one of claims 1 to 8, wherein powering off the target module when the electronic device changes from the unfolded state to the folded state further comprises:
when the electronic device changes from the unfolded state to the folded state, obtaining a key carried in information indicating a target event, wherein the target event is that the electronic device changes from the unfolded state to the folded state;
verifying the target event based on the key; and
if verification on the target event succeeds, powering off the target module.

10. The method according to claim 9, wherein verifying the target event based on the key comprises:
matching the key with currently configured keys in the privacy mode; and
if the key successfully matches all the corresponding currently configured keys in the privacy mode, determining that the verification on the target event succeeds; and otherwise, determining that the verification on the target event does not succeed.

11. The method according to claim 9 or 10, wherein the key comprises at least one of a universally unique identifier UUID, a permission group key, or a scene ID.

12. An electronic device, wherein the electronic device comprises a memory, a processor, and a computer program that is stored in the memory and that can be run on the processor, wherein when the processor executes the computer program, the electronic device control method according to any one of claims 1 to 11 is implemented.

13. A computer-readable storage medium, wherein the computer-readable storage medium comprises a memory and a processor, and the processor executes a computer program stored in the memory, to implement the electronic device control method according to any one of claims 1 to 11.
